# EUROPÄISCHE PATENTANMELDUNG

(11) **EP 1 450 315 A1**
(43) Veröffentlichungstag der Anmeldung: **25.08.2004**
(21) Anmeldenummer: 04002297.2
(22) Anmeldetag: 03.02.2004
(51) Int. Cl.: G07F 7/08, G06F 17/60, G08C 23/04

(54) **Bedienteil für eine Endgeräteanordnung**

(30) Priorität: 03.02.2003 DE 10304354
(71) Anmelder: Dilmaghani, Malek Eskandar, 27607 Langen (DE)
(72) Erfinder: Dilmaghani, Malek Eskandar, 27607 Langen (DE)
(74) Vertreter: Aulich, Martin (DE)

(57) **Zusammenfassung**

Ein Bedienteil für eine Endgeräteanordnung (14), insbesondere eine Fernbedienung (17), mit einem Eingabemittel (37, 38) und mit einem ersten Übertragungsmittel (47) zum Ansteuern der Endgeräteanordnung (14) soll für den Online-Handel von Waren und/oder Dienstleistungen eine komfortablere Bedienung der Endgeräteanordnung (14) ermöglichen. Zu diesem Zweck weist das Bedienteil (17) einen Kartenleser (41), insbesondere einen Geldkartenleser, auf.

## Beschreibung

Die Erfindung betrifft ein Bedienteil für eine Endgeräteanordnung, insbesondere eine Fernbedienung, mit einem Eingabemittel und mit einem ersten Übertragungsmittel zum Ansteuern der Endgeräteanordnung.

Derartige Bedienteile für Endgeräteanordnungen, insbesondere derartige Fernbedienungen, sind weit verbreitet und werden für vielfältige Einsatzzwecke genutzt. Insbesondere haben sich derartige Bedienteile bei Fernsehgeräten durchgesetzt. Mittels der Bedienteile lassen sich die Endgeräteanordnungen bequem und komfortabel bedienen, ohne daß dazu die Bedienperson ihre Position verändern muß. Üblicherweise ist außerdem eine einfache Handhabung mittels sogenannter Kurzwahltasten und sogenannter Navigationstasten möglich. Kürzlich ist eine Multimediaanordnung und ein Verfahren beschrieben worden, mittels derer ein Online-Handel von Waren und Dienstleistungen möglich ist. Auch bei dieser Multimediaanordnung ist ein Bedienteil, nämlich eine Fernbedienung, vorgesehen. Nachteilig hierbei ist, daß bei der genannten Multimediaanordnung eine Vielzahl von Bedienschritten, wie beispielsweise das Einführen einer Geldkarte in einen Geldkartenleser, direkt an der Endgeräteanordnung erforderlich ist und nicht mittels des Bedienteiles vorgenommen werden kann. Insbesondere ältere und technisch weniger versierte Leute werden dadurch leicht abgeschreckt. Außerdem macht das Erfordernis der Handhabung der Endgeräteanordnung direkt, und nicht über das Bedienteil, diese Handhabung unnötig kompliziert.

Das der Erfindung zugrundeliegende Problem ist es, ein Bedienteil für eine Endgeräteanordnung anzugeben, das sich vielfältig einsetzen läßt und das die Betätigung erleichtert.

Das Problem wird dadurch gelöst, daß bei einem Bedienteil der eingangs genannten Art ein Kartenleser, insbesondere ein Geldkartenleser, vorgesehen ist.

In diesem Fall ist es nicht erforderlich, daß eine Bedienperson eine Karte, insbesondere eine Geldkarte, in einen Kartenleser bei der Endgeräteanordnung einführen muß. Vielmehr kann die Bedienperson die Geldkarte unmittelbar in den Kartenleser des Bedienteiles einführen und die gewünschte Kartenzahlung unmittelbar mittels des Bedienteiles durchführen. Dadurch wird die Bedienung der Endgeräteanordnung und insbesondere das Durchführen des Online-Handels erleichtert.

Bei einer Weiterbildung der Erfindung weist das Bedienteil außerdem ein Mobilfunkmodul auf. Das Mobilfunkmodul kann für GSM, GPRS, SMS oder MMS geeignet sein. Auf diese Weise ist es einerseits möglich, daß die Bedienperson das Bedienteil außerdem auch als Mobiltelefon nutzen kann. Außerdem kann dann die zum Online-Handel erforderliche Rückverbindung mit einem virtuellen Einkaufszentrum sowie mit einer Verrechnungseinheit direkt von dem Bedienteil aus hergestellt werden.

Vorzugsweise weist das Bedienteil auch Wiedergabemittel, insbesondere einen Touchscreen auf. Dieser Touchscreen ermöglicht einerseits die Wiedergabe von Informationen. Andererseits ist mittels eines derartigen Touchscreens eine komfortable Eingabe möglich. Insbesondere können vielfältige und variabel gestaltbare Tastaturen realisiert werden.

Eine Weiterbildung der Erfindung zeichnet sich durch ein zweites Übertragungsmittel zur Datenübertragung aus. Dieses zweite Übertragungsmittel, insbesondere Bluetooth, ermöglicht den schnellen Datenaustausch zwischen dem Bedienteil und der Endgeräteanordnung. Insbesondere, wenn eine Vielzahl von Aufgaben der Endgeräteanordnung bereits in dem Bedienteil umgesetzt wird, können so die erforderlichen Datenströme schnell und sicher zwischen dem Bedienteil und der Endgeräteanordnung übertragen werden. Mittels Bluetooth oder eines anderen standardisierten Funkübertragungssystems ist außerdem eine Datenübertragung zu einer Vielzahl weiterer Kommunikationsmittel möglich. Beispielsweise kann dann mittels des Bedienteiles im Bereich eines normalen Geschäftes oder eines Supermarktes eine Datenübertragung zwischen dem Bedienteil und einem Informationsterminal oder einer Kasse erfolgen. Dadurch können einerseits Informationen, wie beispielsweise Übersichtspläne oder Sonderangebote, an das Bedienteil weitergeleitet werden. Andererseits kann an der Kasse die Zahlung direkt mittels des Bedienteiles erfolgen.

Die Handhabung des Bedienteiles mit den Erfindungsmerkmalen wird weiter vereinfacht, wenn ein Identifizierungsmittel vorgesehen ist. Ein derartiges Identifizierungsmittel ist beispielsweise ein Fingerabdruckmodul. Auf diese Weise muß zum Schutz gegen unberechtigte Benutzung oder Manipulation nicht mit sogenannten Pinnummern gearbeitet werden, die einerseits unkomfortabel sind und andererseits keinen besonders guten Schutz liefern. Vielmehr kann die Bedienperson einfach ihren Fingerabdruck identifizieren lassen.

Eine Weiterbildung der Erfindung weist ein GPS-Modul auf. Mittels dieses GPS-Modules sind Navigationsanwendungen des Bedienteiles möglich. Beispielsweise kann eine Anleitung für einen Weg zu einem gewünschten Ziel auf dem Touchscreen dargestellt werden. Es ist jedoch auch möglich, daß beim Betreten eines Geschäftes oder Supermarktes einen Übersichtsplan desselben auf dem Anzeigemittel dargestellt wird.

Ein weiterer Vorteil ergibt sich, wenn das Bedienteil mit den Erfindungsmerkmalen außerdem einen Strichcodeleser aufweist. Mittels dieses Strichcodelesers können Artikel ausgewählt werden, die zu Hause dann auf der Endgeräteanordnung dargestellt werden können. Dies ermöglicht es beispielsweise, ein interessantes Kleidungsstück dem Partner in häuslicher Umgebung zur Beratung darzustellen. Weiter ist das Bestellen einer unterwegs entdeckten Ware und/oder Dienstleistung von zuhause aus möglich.

Ein weiterer Aspekt der Erfindung betrifft außerdem eine Multimediaanordnung für den Online-Handel von Waren und/oder Dienstleistungen mit einer Endgeräteanordnung, die eine Wiedergabeeinheit und ein Bedienteil mit den Erfindungsmerkmalen aufweist. Mittels dieser Multimediaanordnung läßt sich der Online-Handel von Waren und/oder Dienstleistungen einerseits vereinfachen. Andererseits ergeben sich zusätzliche Möglichkeiten dadurch, daß das Bedienteil nicht nur zu Hause nutzbar ist.

Vorzugsweise sind bei dem Lieferanten Kommunikationsmittel für die Datenkommunikation mit dem Bedienteil angeordnet. Die Kommunikationsmittel können in einem zentralen Bereich vorgesehen sein. In diesem Fall können Übersichtspläne und Informationen, beispielsweise über Sonderangebote, an das Bedienteil übermittelt werden. Es ist aber auch möglich, daß die Kommunikationsmittel einer Kasse zugeordnet sind. In diesem Fall kann das Bezahlen an der Kasse mittels des Bedienteiles erfolgen.

Ein dritter Aspekt der Erfindung betrifft ein Verfahren für den Online-Handel von Waren und/oder Dienstleistungen, bei dem mittels eines Bedienteiles mit den Erfindungsmerkmalen optional die erste Rückverbindung mit dem virtuellen Einkaufszentrum oder eine dritte Rückverbindung mit einem Lieferanten hergestellt wird.

Im folgenden wird ein Ausführungsbeispiel der Erfindung anhand der Zeichnungen näher erläutert. Es zeigen:
- Fig. 1: eine schematische Darstellung einer Multimediaanordnung mit den Erfindungsmerkmalen,
- Fig. 2: ein Bedienteil der Multimediaanordnung von Fig. 1, und
- Fig. 3: eine schematische Detailansicht des Innenaufbaus des Bedienteils von Fig. 2.

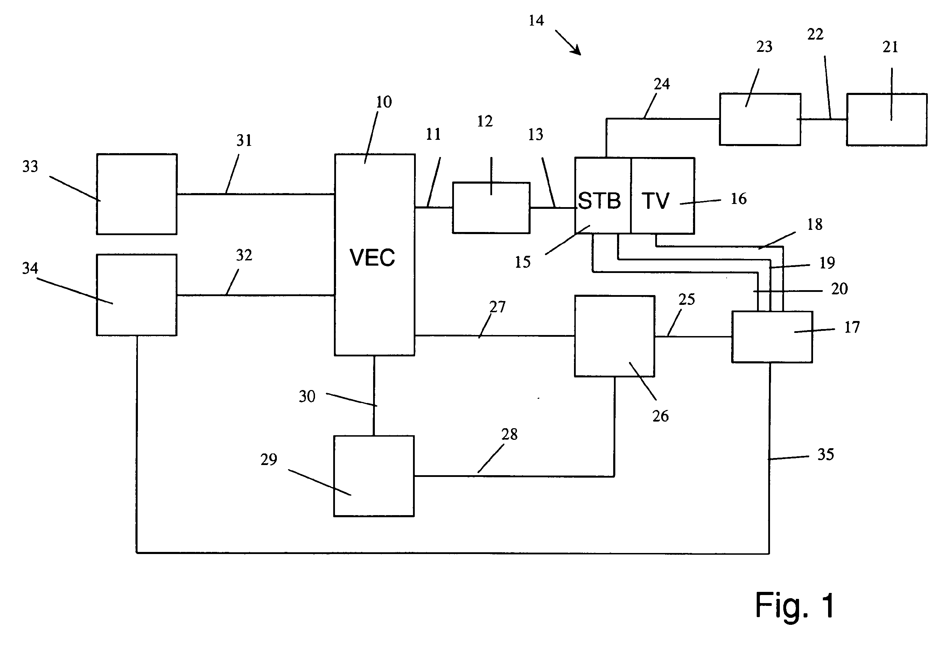

Fig. 1 zeigt eine schematische Darstellung einer Multimediaanordnung mit den Erfindungsmerkmalen. Ein virtuelles Einkaufszentrum 10 ist mittels einer Leitung 11 mit einer Sendestation 12 verbunden. Die Sendestation 12 (Digital Video Broadcasting DVB) ist mittels einer Lieferverbindung 13 mit einer Endgeräteanordnung 14, einer sogenannten Multimedia-Home-Plattform (MHP), verbunden. Die Lieferverbindung 13 ist eine Breitbandverbindung via Breitbandkabel oder Satellit.

Die Endgeräteanordnung 14 weist eine sogenannte Set-Top-Box 15 und eine daran angeschlossene Wiedergabeeinheit 16, nämlich ein Fernsehgerät 16, auf. Die Endgeräteanordnung 14 ist bei einem Endabnehmer angeordnet. Nicht in der Fig. 1 dargestellt sind Eingabemittel, wie beispielsweise eine Tastatur. Die Endgeräteanordnung 14 weist weiter ein Bedienteil 17, nämlich eine Fernbedienung, auf. Das Bedienteil 17 ist mittels einer drahtlosen Verbindung 18 mit dem Fernsehgerät 16 verbunden. Die drahtlose Verbindung 18 ist beispielsweise eine Infrarotverbindung. Die Fernbedienung 17 ist weiter mittels einer drahtlosen Verbindung 19 mit der Set-Top-Box 15 verbunden. Die drahtlose Verbindung 19 ist beispielsweise eine Funkverbindung mittels Bluetooth. Optional kann eine weitere drahtlose Verbindung 20 zwischen dem Bedienteil 17 und der Set-Top-Box 15 vorgesehen sein. Diese weitere drahtlose Verbindung 20 kann ebenfalls eine Infrarotverbindung sein.

Bei dem Endabnehmer sind außerdem Erfassungsmittel 21 angeordnet, die mittels einer Verbindung 22 mit Übertragungsmitteln 23 verbunden sind. Die Übertragungsmittel 23 stehen ihrerseits mittels einer Verbindung 24 mit der Set-Top-Box 15 in Verbindung. Die Erfassungsmittel 21 können beispielsweise ein Zähler für Strom, Gas, Wasser oder die Benutzung einer anderen Ressource sein. Vorzugsweise weisen die Erfassungsmittel 21 einen digitalen Zähler und eine Ausleseeinheit auf. Die Verbindung 22 kann eine Leitung 22 oder auch eine andere geeignete Verbindung sein, wie beispielsweise eine Funkstrecke oder eine Infrarotübertragung. Die Verbindung 24 kann ebenfalls eine konventionelle Leitung 24, eine Funkstrecke oder eine Infrarotübertragungsstrecke sein.

Mittels des digitalen Zählers des Erfassungsmittels 21 wird bei dem gezeigten Ausführungsbeispiel der Verbrauch an Wärmeenergie an einem Heizkörper erfaßt. Der Zählerstand wird sodann über die Verbindung 22 an das Übertragungsmittel 23 übertragen. Das Übertragungsmittel 23 kommuniziert auf diese Weise mit mehreren, nicht in der Figur einzeln dargestellten Erfassungsmitteln 21. Das Übertragungsmittel 23 ist vorzugsweise an einem zentralen Punkt angeordnet und überträgt die von den Erfassungsmitteln 21 erfaßten Daten über die Funkverbindung 24 an die Set-Top-Box 15.

Die Fernbedienung 17 ist mittels einer schmalbandigen Verbindung 25 mit einer Vermittlungsstelle 26 verbunden. Bei dem dargestellten Ausführungsbeispiel ist die schmalbandige Verbindung 25 eine Mobilfunkverbindung mittels SMS. Es kann aber auch eine normale Telefonverbindung, eine Verbindung mittels UMTS, GPRS oder GMS-Datenservice verwendet werden. Die Vermittlungsstelle 26 ist stellvertretend für eine oder mehrere Vermittlungsstellen des öffentlichen Telekommunikations- oder Mobilfunknetzes dargestellt, die gerade verwendet werden. Die Vermittlungsstelle 26 ist mittels einer ersten Rückverbindung 27 mit dem virtuellen Einkaufszentrum 10 und mittels einer zweiten Rückverbindung 28 mit einer Verrechnungseinheit 29 verbunden. Die Rückverbindungen 27, 28 sind schmalbandig, ähnlich der Verbindung 25. Im einzelnen werden in der Fig. 1 für die Rückverbindungen 27, 28 ebenfalls SMS verwendet. Die Verbindungen 25, 27, 28 sind bidirektional ausgebildet. Wesentlich bei dem gezeigten Ausführungsbeispiel ist, daß die Verbindung 25 zusammen mit den Rückverbindungen 27, 28 jeweils direkt und exklusiv mit dem virtuellen Einkaufszentrum 10 bzw. der Verrechnungseinheit 29 verbunden ist. Dies ist bei den dargestellten leitungsvermittelten Verbindungen der Fall. Es ist aber unwesentlich, ob die Exklusivität der jeweiligen Verbindung durch eine exklusive Leitung oder durch einen exklusiven Zeitschlitz sichergestellt ist. Die Verrechnungseinheit 29 ist ein Zahlungsserver eines Kreditinstitutes. Der Zahlungsserver 29 kann bei dem Kreditinstitut selbst oder bei Sicherstellung der erforderlichen Sicherheitserfordernisse auch bei dem virtuellen Einkaufszentrum 10 angeordnet sein. Der Zahlungsserver 29 ist mittels einer weiteren Verbindung 30 mit dem virtuellen Einkaufszentrum 10 verbunden. Die weitere Verbindung 30 ist für den Betrieb der Multimediaanordnung allerdings nicht notwendig. Die Kommunikation zwischen der Verrechnungseinheit 29 und dem virtuellen Einkaufszentrum 10 kann auch über die Verbindungen 27, 28 und die Vermittlungsstelle 26 erfolgen. Die weitere Verbindung 30 ist ähnlich den Verbindungen 25, 27, 28 ausgebildet.

Das virtuelle Einkaufszentrum ist außerdem mittels Lieferverbindungen 31, 32 mit Lieferanten 33, 34 verbunden. In der Figur sind zwei Lieferanten 33, 34 stellvertretend dargestellt. Das virtuelle Einkaufszentrum kann mit einer beliebigen Anzahl Lieferanten verbunden sein.

In der Fig. 1 ist die Fernbedienung 17 außerdem mit einer Verbindung 35 mit einem Lieferanten 34 verbunden. Wahlweise kann auch eine Verbindung ähnlich der Verbindung 35 mit einem der anderen Lieferanten bestehen. Die Verbindung 35 ist optional.

Mittels der Fernbedienung 17 kann der Anwender über die Infrarotverbindung 18 den Fernseher 16 fernbedienen. Gleichfalls ist eine Fernbedienung der Set-Top-Box 15 über die Infrarotverbindung 19 möglich. Es ist aber auch eine Fernbedienung der Set-Top-Box 15 über die Verbindung 20, nämlich Bluetooth, möglich.

Das virtuelle Einkaufszentrum 10 liefert von den Lieferanten 33, 34 empfangene Waren und/oder Dienstleistungen über die Leitung 11, die Sendestation 12 und die breitbandige Lieferverbindung 13 an die Set-Top-Box 15. Von der Set-Top-Box 15 empfangene Angebote werden auf dem Fernseher 16 dargestellt. Der Anwender wählt mit seiner Fernbedienung 17 aus den auf dem Fernseher 16 dargestellten Angeboten aus und gibt seine Bestellung über die schmalbandige Rückverbindung 25, 26, 27 an das virtuelle Einkaufszentrum 10 weiter. Dort werden die Kosten für die bestellten Waren und/oder Dienstleistungen ermittelt und über die breitbandige Verbindung 11, 12, 13 an die Set-Top-Box 15 weitergegeben. Auf dem Fernseher 16 werden sodann die Kosten für die bestellten Waren und/oder Dienstleistungen angegeben. Bestätigt der Anwender mittels seiner Fernbedienung 17 die Bestellung, so wird eine Finanztransaktion zum Bezahlen der bestellten Waren und/oder Dienstleistungen vorbereitet. Zu diesem Zweck führt der Anwender seine Geldkarte in einen Geldkartenleser in der Fernbedienung 17 ein. Die Fernbedienung 17 stellt sodann eine schmalbandige Verbindung 25, 26, 28 zu der Verrechnungseinheit 29 her. Die Verrechnungseinheit 29 steht dabei ebenfalls mit dem virtuellen Einkaufszentrum 10 über die Verbindung 30 in Kontakt. Auf diese Weise kann direkt Geld von einer Geldkarte in der Fernbedienung 17 über die Verbindungen 25, 26, 28 bzw. 25, 26, 27 und 30 mittels der Verrechnungseinheit 29 auf eine Geldkarte, insbesondere eine virtuelle Geldkarte, des virtuellen Einkaufszentrums 10, übertragen werden. Nach der vorstehend beschriebenen Bezahlung erfolgt dann die Lieferung der bestellten Waren und/oder Dienstleistungen über die Lieferverbindung 11, 12, 13 an die Set-Top-Box 15. Dies kann beispielsweise ein Videofilm oder ein Spiel zum Spielen auf der Endgeräteanordnung 14 sein.

Wenn der Anwender sein Haus verläßt und dabei die Fernbedienung 17 mitführt, kann beispielsweise im Bereich eines Supermarktes oder Kaufhauses die Verbindung 35 mit einem Lieferanten 34 hergestellt werden. Diese Verbindung 35 kann beispielsweise mittels Bluetooth erfolgen. Die Bezahlung einer direkt beim Lieferanten 34 aufgegebenen Bestellung kann dann ebenfalls mittels der Fernbedienung 17 über die Verbindung 25, 26, 27 und 25, 26, 28 sowie 30 erfolgen.

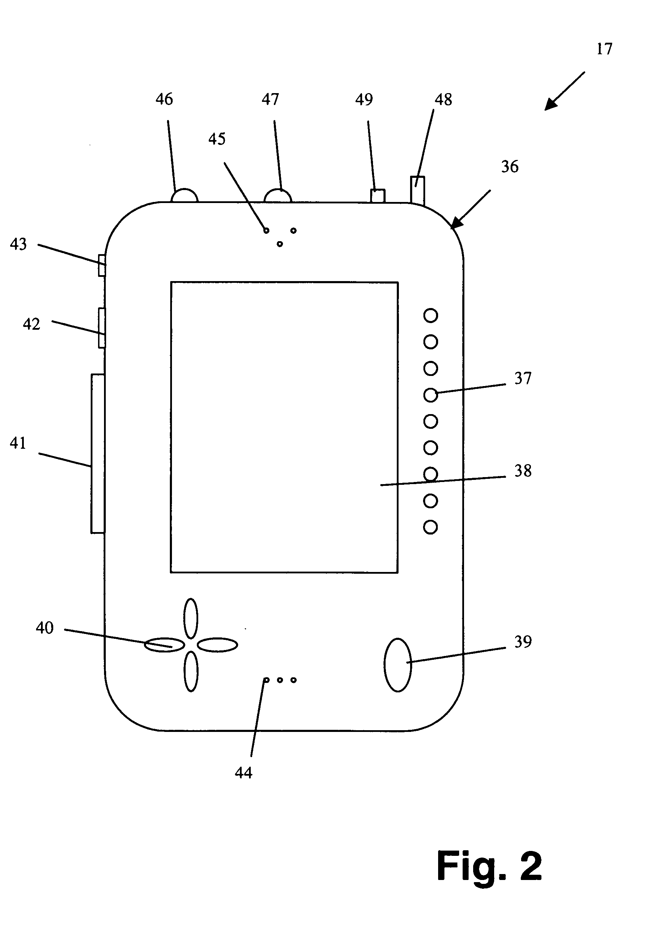

Fig. 2 zeigt in einer schematischen Darstellung die einzelnen Komponenten der Fernbedienung 17 von Fig. 1. Die Fernbedienung 17 weist ein Gehäuse 36 auf, in dem mehrere Tasten 37 einer Tastatur, ein Anzeigemittel 38, ein Identifikationsmittel 39 und mehrere Tasten 40 eines Navigationstastenfeldes angeordnet sind. Das Gehäuse 36 kann aus einem geeigneten Material, wie beispielsweise einem schlagfesten Kunstharzmaterial, bestehen. Die Tasten 37, von denen zur besseren Übersicht nur eine Taste 37 mit einem Bezugszeichen versehen ist, können Druckschaltern oder auch solchen Schaltern zugeordnet sein, die auf die Änderung einer elektrischen Größe, wie beispielsweise der Kapazität, reagieren. Das Anzeigemittel 38 ist bei dem dargestellten Ausführungsbeispiel ein sogenannter Touchscreen. Auf diesem Touchscreen 38 sind einerseits Informationen darstellbar, andererseits ist eine Eingabe mittels Berühren des Touchscreens mit einem Spezialstift oder mit der Hand möglich. Das Identifikationsmittel 39 ist ein Fingerabdrucksensor, der beim Berühren mit der Fingerspitze den Fingerabdruck überprüft. Dies kann beispielsweise optisch oder mittels einer elektromagnetischen Strahlung einer geeigneten Frequenz erfolgen, so daß neben der reinen Oberflächenstruktur des Fingerabdrucks auch noch die unteren Hautschichten überprüft werden können. Die Navigationstasten 40 dienen zur schnellen Navigation in Menüpunkten, die auf dem Touchscreen 38 dargestellt werden.

In dem Gehäuse 36 ist ferner ein Kartenleser 41, eine Schnittstelle 42, ein Ausgang 43 für einen Kopfhörer oder ein sogenanntes Headset, ein Mikrofon 44, ein Lautsprecher 45, ein Strichcodeleser 46, eine Infrarotdiode 47 sowie eine Antenne 48 angeordnet. Außerdem ist in dem Gehäuse 36 eine weitere Antenne 49 vorgesehen. Der Kartenleser 41 dient zum Aufnehmen und Lesen bzw. Beschreiben einer sogenannten Smartkarte, insbesondere einer Geldkarte. Die Schnittstelle 42 kann eine USB-Schnittstelle oder auch eine andere geeignete Schnittstelle sein. An den Ausgang 43, der beispielsweise eine konventionelle Klinkensteckerbuchse 43 sein kann, läßt sich ein Kopfhörer oder ein Headset anschließen. Das Mikrofon 44 und der Lautsprecher 45 ermöglichen ein Telefonieren mittels der Fernbedienung 17. Außerdem ist so eine Spracherkennung zur Eingabe oder Sprachsteuerung möglich. Der Strichcodeleser 46 kann zum Einlesen eines Strichcodes über denselben hinwegbewegt werden. Die Infrarotdiode 47 dient zum Fernbedienen beispielsweise des Fernsehgerätes 16 oder der Set-Top-Box 15. Die Antenne 48 dient als Mobilfunkantenne für GSM, GPRS, UMTS oder ähnliches. Gleichzeitig kann die Antenne 48 auch die Antenne für ein GPS-Modul sein. Es kann aber auch eine separate Antenne für ein GPS-Modul verwendet werden. Die weitere Antenne 49 dient als Sende- und Empfangsantenne für Bluetooth.

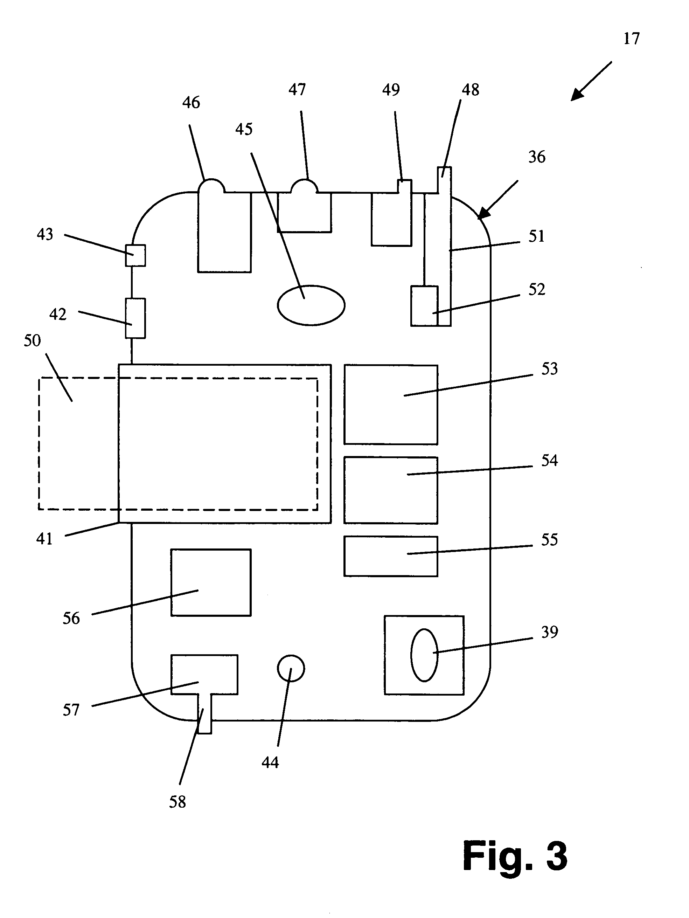

Fig. 3 zeigt schematisch den Innenaufbau der Fernbedienung von Fig. 2. Gleiche Komponenten tragen die gleichen Bezugsziffern wie in Fig. 2. Wie sich der Figur entnehmen läßt, kann eine Smartcard, beispielsweise eine sogenannte Geldkarte 50 in den Geldkartenleser 41 eingeführt werden. Ein Mobilfunkmodul 51 mit einer SIM-Karte 52 ist mit der Antenne 48 verbunden. Nicht in der Figur dargestellt ist ein GPS-Modul, das ebenfalls mit der Antenne 48 oder einer weiteren Antenne verbunden ist. Die Fernbedienung 17 weist weiter einen Treiber 53 zum Ansteuern des Touchscreens 38 auf. Eine Steuerung 54, der sogenannter Flashspeicher 55 sowie außerdem nicht in der Figur dargestellter RAM-Speicher und ROM-Speicher zugeordnet ist, ist zur Steuerung der einzelnen Komponenten der Fernbedienung 17 ebenfalls in dem Gehäuse 36 angeordnet. Nicht in der Figur dargestellt sind die einzelnen Verbindungen der verschiedenen Komponenten untereinander sowie mit der Steuerung 54. Diese Verbindung kann beispielsweise mittels eines sogenannten Bussystems oder mittels direkter Verdrahtung gewährleistet werden.

Weiter in der Figur dargestellt ist ein Energiespeicher 56, nämlich ein Lithium-lonen-Akkumulator 56, sowie eine Ladeschaltung 57 für den Energiehaushalt der Fernbedienung 17 sowie für das Steuern des Ladevorganges des Lithium-lonen-Akkumulators 56. Die Ladeschaltung 57 weist außerdem einen Eingang 58 für eine nicht in der Fig. 3 dargestellte Spannungsversorgung auf.

Mittels der Fernbedienung 17 ist zum einen die konventionelle Fernbedienung, beispielsweise des Fernsehgerätes 16, unter Verwenden der Infrarotdiode 47 möglich. Die dafür erforderliche Tastatur kann entweder aus den Tasten 37, 40 bestehen. Es ist aber auch möglich, daß einzelne Tastenfelder auf dem Touchscreen 38 wiedergegeben werden. Zum Bezahlen auf die vorstehend bereits beschriebene Weise kann eine Geldkarte 50 in den Kartenleser 41 eingeführt werden. Die erforderlichen Daten zum Bezahlen können dann mittels Bluetooth 49 beispielsweise an eine Supermarktkasse übertragen werden. Die erforderliche Rückverbindung 25, 26, 28 zu der Verrechnungseinheit 29 wird dann unter Zuhilfenahme des Mobilfunkmodules 51 hergestellt. Wird die Fernbedienung 17 zu Hause mit der Set-Top-Box 15 verwendet, kann zum Bezahlen die erforderliche Information via Bluetooth 49 mit der Set-Top-Box 15 ausgetauscht werden. Es ist aber auch möglich, daß die erforderliche Information mittels der Verbindung 25, 26, 27 via des Mobilfunkmoduls 51 mit dem virtuellen Einkaufszentrum 10 ausgetauscht wird. Die weiter erforderlichen Informationen werden dann mittels der Rückverbindung 25, 26, 28 via des Mobilfunkmodules 51 mit der Verrechnungseinheit 29 ausgetauscht. Eine Identifikation des berechtigten Nutzers oder auch der Zugangsberechtigung zu verschiedenen Dienstleistungen erfolgt mittels des Fingerabdrucklesers 39. Dadurch kann auf einfache Weise die Berechtigung auch zu einer Vielzahl verschiedener Nutzungsarten sichergestellt werden. Beispielsweise können mehrere verschiedene Finger nacheinander in unterschiedlichen Kombinationen als Berechtigungsnachweis verwendet werden. Dadurch wird eine größtmögliche Sicherheit gewährleistet. Auf dem Flashspeicher 55 können Anwendungen, Spiele, Musik und Videodateien wie auch Lagepläne und Ortsverzeichnisse gespeichert sein. Diese Informationen können dann beispielsweise auf dem Touchscreen 38 dargestellt werden.

Mittels der vorstehend beschriebenen Fernbedienung 17 läßt sich eine Vielzahl von Anwendungen bei gleichzeitig größtmöglicher Sicherheit bereitstellen. In heimischer Umgebung kann die Fernbedienung 17 wie eine konventionelle Fernbedienung verwendet werden. Darüber hinaus läßt sich auch das Bezahlen mit elektronischem Geld durchführen. Wegen der speziellen Ausführung der Multimediaanordnung, bei der ein direkter Kontakt zu der Verrechnungseinheit 29 hergestellt wird, ist dieses elektronische Bezahlen nicht nur auf ein Kreditsystem beschränkt, bei dem entweder der Anwender vorab einen Kredit gibt, ein dem Kredit entsprechender Wert auf einer Smartcard gespeichert wird, und anschließend Waren und Dienstleistungen in bis zu dem Wert entsprechendem Umfang genutzt werden können, oder bei dem der Lieferant dem Anwender für die Lieferung einer Ware und/oder Dienstleistung zunächst einen Kredit einräumt und diesen Kredit dann nachfolgend anhand übertragener Daten abrechnet. Vielmehr ist eine direkte Verschiebung von elektronischem Geld möglich, bei der trotzdem eine volle Kontrolle der im Umlauf befindlichen Geldmenge erfolgt. Diese Möglichkeit der elektronischen Bezahlung kann sowohl von zu Hause aus als auch unterwegs genutzt werden. Mittels der Fernbedienung 17 ist das Telefonieren möglich, es können Musikstücke und Videostücke wiedergegeben werden, es können Spiele gespielt und persönliche Adreßdaten sowie Terminkalender verwaltet werden. Darüber hinaus können über die Bluetooth-Verbindung mit dem Bluetooth-Modul 49 Daten mit anderen bluetoothfähigen Aggregaten ausgetauscht werden. Dies ist beispielsweise zur Information an einer Informationsstelle, beispielsweise eines Kaufhauses, möglich. Es ist aber auch möglich, via Bluetooth zum Bezahlen Daten mit einer Supermarktkasse auszutauschen.

### Bezugszeichenliste:

- 10: virtuelles Einkaufszentrum
- 11: Leitung
- 12: Sendestation
- 13: Lieferverbindung
- 14: Endgeräteanordnung
- 15: Set-Top-Box
- 16: Fernsehgerät
- 17: Fernbedienung
- 18: Verbindung
- 19: Verbindung
- 20: Verbindung
- 21: Erfassungsmittel
- 22: Verbindung
- 23: Übertragungsmittel
- 24: Verbindung
- 25: Verbindung
- 26: Vermittlungsstelle
- 27: Rückverbindung
- 28: Rückverbindung
- 29: Verrechnungseinheit
- 30: Verbindung
- 31: Lieferverbindung
- 32: Lieferverbindung
- 33: Lieferant
- 34: Lieferant
- 35: Verbindung
- 36: Gehäuse
- 37: Tasten
- 38: Touchscreen
- 39: Fingerabdruckleser
- 40: Navigationstasten
- 41: Kartenleser
- 42: Schnittstelle
- 43: Ausgang
- 44: Mikrofon
- 45: Lautsprecher
- 46: Strichcodeleser
- 47: Infrarotdiode
- 48: Antenne
- 49: Antenne
- 50: Geldkarte
- 51: Mobilfunkmodul
- 52: SIM-Karte
- 53: Treiber
- 54: Steuerung
- 55: Flashspeicher
- 56: Energiespeicher
- 57: Ladeschaltung
- 58: Eingang

## Patentansprüche

1. Bedienteil für eine Endgeräteanordnung, insbesondere Fernbedienung (17), mit einem Eingabemittel (37, 40), und mit einem ersten Übertragungsmittel (47) zum Ansteuern der Endgeräteanordnung (14), **gekennzeichnet durch** einen Kartenleser (41), insbesondere einen Geldkartenleser.

2. Bedienteil nach Anspruch 1, **gekennzeichnet durch** ein Mobilfunkmodul (51).

3. Bedienteil nach Anspruch 1 oder 2, **gekennzeichnet durch** ein Wiedergabemittel (38), insbesondere einen Touchscreen.

4. Bedienteil nach einem der vorhergehenden Ansprüche, **gekennzeichnet durch** ein zweites Übertragungsmittel (49) zur Datenübertragung, insbesondere Bluetooth.

5. Bedienteil nach einem der vorhergehenden Ansprüche, **gekennzeichnet durch** ein Identifizierungsmittel (39), insbesondere ein Fingerabdruckmodul.

6. Bedienteil nach einem der vorhergehenden Ansprüche, **gekennzeichnet durch** ein GPS-Modul.

7. Bedienteil nach einem der vorhergehenden Ansprüche, **gekennzeichnet durch** einen Strichcodeleser (46).

8. Multimediaanordnung für den Online-Handel von Waren und/oder Dienstleistungen,
- mit einem virtuellen Einkaufszentrum (10), von dem Waren und/oder Dienstleistungen von Lieferanten (33, 34) abrufbar sind,
- mit einer Endgeräteanordnung, die eine Wiedergabeeinheit (16) und ein Bedienteil (17), insbesondere nach einem der vorhergehenden Ansprüche, aufweist,
- mit einer Lieferverbindung (11, 12, 13) zwischen dem virtuellen Einkaufszentrum (10) und der Endgeräteanordnung (14),
- mit einer ersten Rückverbindung (25, 26, 27) von der Endgeräteanordnung (14) zu dem virtuellen Einkaufszentrum (10) zum Erteilen eines Auftrags, wobei eine Verrechnungseinheit (29) mit dem virtuellen Einkaufszentrum (10) zum Durchführen einer Finanztransaktion als Bezahlung für die an die Endgeräteanordnung (14) gelieferten Waren und/oder Dienstleistungen in Verbindung steht, und
- mit einer zweiten Rückverbindung (25, 26, 28), mittels derer die Endgeräteanordnung (14) mit der Verrechnungseinheit (29) zum Durchführen der Finanztransaktion in Verbindung steht,
**dadurch gekennzeichnet, daß** das Bedienteil (17) optional mittels der ersten Rückverbindung (25, 26, 27) mit dem virtuellen Einkaufszentrum (10), mittels der zweiten Rückverbindung (25, 26, 28) mit der Verrechnungseinheit (29) oder mittels einer dritten Rückverbindung (35) mit einem Lieferanten (34) in Verbindung steht.

9. Multimediaanordnung nach Anspruch 8, **dadurch gekennzeichnet, daß** bei dem Lieferanten (34) Kommunikationsmittel für die dritte Rückverbindung (35) angeordnet sind.

10. Multimediaanordnung nach Anspruch 9, **dadurch gekennzeichnet, daß** die Kommunikationsmittel in einem zentralen Bereich vorgesehen sind.

11. Multimediaanordnung nach Anspruch 9 oder 10, **dadurch gekennzeichnet, daß** die Kommunikationsmittel einer Kasse zugeordnet sind.

12. Verfahren für den Online-Handel von Waren und/oder Dienstleistungen, bei dem ein Anwender unter Verwenden einer Endgeräteanordnung (14) Waren und/oder Dienstleistungen mittels eines Anforderungssignals über eine erste Rückverbindung (25, 26, 27) von einem virtuellen Einkaufszentrum (10) anfordert, bei dem mittels eines Kartenlesers (41) Abrechnungsdaten von einer Anwenderkarte (50) zur Verrechnung der angeforderten Waren und/oder Dienstleistungen übertragen werden, bei dem eine Verrechnungseinheit (29) eine Finanztransaktion als Bezahlung für die angeforderten Waren und/oder Dienstleistungen durchführt, bei dem die angeforderten Waren und/oder Dienstleistungen mittels einer breitbandigen Lieferverbindung (11, 12, 13) an den Anwender geliefert werden, und bei dem die Abrechnungsdaten von der Endgeräteanordnung (14) über eine zweite Rückverbindung (25, 26, 28) an die Verrechnungseinheit (29) übertragen werden, **dadurch gekennzeichnet, daß** mittels eines Bedienteiles (17), insbesondere nach einem der Ansprüche 1 bis 7, der Endgeräteanordnung (14) optional die erste Rückverbindung (25, 26, 27) mit dem virtuellen Einkaufszentrum (10) oder eine dritte Rückverbindung (35) mit einem Lieferanten (34) hergestellt wird.
